# EUROPÄISCHE PATENTSCHRIFT

(11) **EP 1 972 889 B1**
(45) Veröffentlichungstag und Bekanntmachung des Hinweises auf die Patenterteilung: **19.01.2011**
(21) Anmeldenummer: 08102615.5
(22) Anmeldetag: 14.03.2008
(51) Int. Cl.: G01C 9/26, G01B 3/04, G01B 3/30

(54) **Wasserwaage**
Level
Niveau à bulle

(30) Priorität: 22.03.2007 DE 202007004412 U
(43) Veröffentlichungstag der Anmeldung: 24.09.2008
(73) Patentinhaber: Stabila Messgeräte Gustav Ullrich GmbH, 76855 Annweiler (DE)
(72) Erfinder: Henschel, Jürgen, 76855, Annweiler (DE)
(74) Vertreter: Stoffregen, Hans-Herbert

(56) Entgegenhaltungen:
- DE-A1- 3 414 216
- DE-A1- 19 503 408
- US-A- 3 311 988
- US-A- 4 130 943
- US-A- 5 459 935
- US-B1- 6 305 093
- US-B1- 6 675 490

## Beschreibung

Die Erfindung bezieht sich auf eine Wasserwaage umfassend einen Profilkörper mit Seitenflächen, Stirnflächen oder -bereichen und zwischen den Seitenflächen verlaufenden Messflächen bildenden Längsflächen, die mit ihren Längsrändern seitlich über die Seitenflächen vorstehen, sowie zumindest einen Lagesensor wie Libelle, wobei in zumindest einem Längstand eine gleichmäßige Folge von Vertiefungen vorgesehen ist.

Wasserwaagen dienen dazu, die Horizontalität oder Vertikalität von Gegenständen zu überprüfen. Hierzu ist ein Lagesensor wie eine in dem Wasserwaagenkörper eingelassene Libelle vorgesehen, die zu den Messflächen ausgerichtet ist. Häufig weisen entsprechende Wasserwaagen mehr als einen Lagesensor auf.

Um zusammengesetzte Bauwerke wie Mauern oder Pflasterungen zu überprüfen, wird die Wasserwaage entweder auf ein Richtholz aufgesetzt oder es gelangen Wasserwaagen von Längen zum Beispiel im Bereich von 30 cm und 200 cm zum Einsatz.

Der Wasserwaagenkörper kann aus Hartholz, Kunststoff, Aluminiumguss oder Aluminium bestehen, um nur beispielhaft Materialien zu nennen.

Aus der DE-A-34 14 216 ist eine Wasserwaage bekannt, mit der nicht nur die Horizontalität oder Vertikalität überprüft werden kann, sondern zusätzlich die Möglichkeit besteht, Bauteile genau beabstandet auf einer Linie liegend anzuordnen. Bei den Bauteilen handelt es sich um Schalter- und Steckdosenanordnungen. Hierzu weist der Wasserwaagenkörper von einer Längsfläche ausgehende schablonenhafte Ausnehmungen auf, die im Schnitt eine Halbkreisgeometrie aufweisen. Verteilung und Größe der Ausnehmung ist dabei derart, dass die entsprechende Längsfläche als Messfläche nicht mehr genutzt werden kann.

Ein Schalterdosensetzgerät in Form eines Plattenelements ist aus der DE-A-195 03 408 bekannt. In den Längsrändern sind Kerben eingebracht, die zu Markierungszwecken dienen. Um die Schablone ausrichten zu können, ist eine Libelle vorgesehen.

Zum Aufmessen von Bauteilen wird nach der DE-U-93 17 625 ein Schalterdosensetzgerät benutzt, das aus einem Flachkörper besteht, in dem Kerben zu Markierungszwecken eingebracht sind.

Gegenstand der DE-U-202 02 126 ist eine Wasserwaage, die aus einem Metallprofil in T-Form besteht. Aus der DE-U-83 03 339 ist ein mehrgliedriger Faltstab bekannt, bei dem Längseinteilungen in Form von Vertiefungen ausgebildet sind.

Ein Lineal, das auch die Funktion einer Wasserwaage ausübt, ist als gattungsbildender Stand der Technik der US-B-6 305 093 zu entnehmen. Das Lineal weist einen drei Schenkel aufweisenden Körper auf, wobei zwei Schenkel als Messschenkel ausgebildet sind und in ihren Längsrändern Einkerbungen aufweisen.

Aus der US-A-4 130 943 ist eine verlängerbare Wasserwaage bekannt, die im Steg Aussparungen aufweist.

Eine Kombination einer Wasserwaage mit einem Lineal ist Gegenstand der US-A-3 311 998, wobei das Lineal Markierungen aufweist.

Eine Wasserwaage nach der US-B-6 675 490 weist entfernbare Kappen auf.

Die US-A-5 459 935 bezieht sich auf eine aus zwei Schenkeln bestehende Wasserwaage, die zueinander verschwenkbar sind. Um den Winkel einzustellen, ist eine entsprechende Skala im Gelenkbereich vorhanden.

Der vorliegenden Erfindung liegt die Aufgabe zugrunde, eine Wasserwaage mit als Messflächen ausgebildeten Längsflächen der eingangs genannten Art so weiterzubilden, dass nicht nur in gewohnter Weise eine Überprüfung der Horizontalität oder Vertikalität erfolgen kann, sondern insbesondere auch bei zusammengesetzten Bauwerken eine Hilfestellung für einzuhaltende Abstände gegeben ist. Insbesondere soll die Wasserwaage als Richt- oder Maurerwaage dienen, die es dem Benutzer erleichtert, zusätzlich unterschiedliche Abstandsmaße zu überprüfen bzw. als Hilfsmittel zu dienen, um gegebenenfalls voneinander abweichende Abstände einzuhalten.

Erfindungsgemäß wird die Aufgabe im Wesentlichen dadurch gelöst, dass der Abstand zwischen den Vertiefungen der Folge gleich Schichtmaß eines Normziegels ist.

Dabei ist insbesondere vorgesehen, dass Folgen mit unterschiedlichen Abständen der Vertiefungen von den entlang einer Seitenfläche verlaufenden Längsrändern ausgehen.

Erfindungsgemäß ist der Abstand zwischen den Vertiefungen einer Folge gleich Schichtmaß eines Normziegels. Somit können mit der Wasserwaage Hilfestellungen für das Schichtmaß von Ziegeln insbesondere unterschiedlicher Abmessungen gegeben werden. Folglich erleichtert die erfindungsgemäße Wasserwaage insbesondere das Mauern von Ziegelsteinen, so dass diese neben der erforderlichen Vertikalität auch den gewünschten Abstand zueinander einhalten.

Besteht die Möglichkeit, dass die Abstände der Vertiefungen in jedem Längsrand voneinander abweichen, dass also bei einer Wasserwaage mit zwei Messflächen insgesamt vier unterschiedliche Folgen von Vertiefungen vorhanden sind, so sind bevorzugterweise in den Längsränder einer Messfläche gleiche Folgen vorgesehen.

Die Vertiefungen wie Einkerbungen oder Nuten sind bevorzugterweise allein in den Längsrändern selbst vorhanden, ohne dass sich eine Erstreckung innerhalb der Messflächen, deren Bereiche zwischen den Seitenflächen verlaufen.

Ferner sollten die Vertiefungen in ihren außenlängsseitig verlaufenden Kanten verrundet sein.

Bevorzugterweise ist die Vertiefung eine eine Rechteckgeometrie aufweisende Aussparung wie Nut in dem Längsrand. Dabei sollte die Vertiefung beabstandet zur von der Seitenfläche aufgespannten Ebene enden, also sich ausschließlich im äußeren Randbereich des Längsrandes erstrecken. Andere Geometrien wie im Schnitt Dreieckformen für die Vertiefungen sind gleichfalls möglich.

Um die Gefahr von Verletzungen auszuschließen, sollte der Längsrand endseitig einen sich querschnittsmäßig verjüngenden Randbereich aufweisen, innerhalb der die Vertiefung verläuft.

Als bevorzugte Abmessungen der Vertiefungen hinsichtlich deren jeweilige Erstreckung senkrecht zu Längsrichtung des Profilkörpers liegen zwischen 0, 1 mm und 5 mm, bevorzugterweise 2 mm bis 4 mm und in Längsrichtung zwischen 1 mm und 10 mm, insbesondere weniger als 5 mm. Die geringe Erstreckung quer zur Längsrichtung ist dadurch erzielbar, dass allein die Beschichtung oder Lackierung des Wasserwaagenkörpers bis zum Körper selbst durchsetzt wird.

Die Vertiefungen dienen dabei nicht nur dazu, das Schichtmaß von Ziegeln zu überprüfen bzw. als Lehre für das Mauern genutzt zu werden, sondern können aufgrund der Gestaltung auch zum Einbringen einer Schnur dienen, so dass die Wasserwaage auch die Funktion einer Schnurwasserwaage ausübt.

Somit genügt die erfindungsgemäße Wasserwaage drei Funktionen, nämlich der üblicher Wasserwaagen zur Überprüfung der Horizontalität und Vertikalität, der einer Richt- oder Maurerwaage sowie der einer Wasserwaage zum Einhängen einer Schnur.

Die Erfindung zeichnet sich auch aus durch die Verwendung einer Wasserwaage umfassend einen Profilkörper mit Seitenflächen, Stirnflächen und zwischen den Seitenflächen verlaufenden Messflächen bildenden Längsflächen, die mit ihren Längsrändern seitlich über die Seitenflächen vorstehen, sowie zumindest einen Lagesensor, wobei in zumindest einem Längsrand eine gleichmäßige Folge von Vertiefungen vorgesehen ist, zum Errichten eines Mauerwerks von im Schichtmaß übereinander anordbaren Normziegeln, wobei der Abstand zwischen zwei aufeinander folgenden Vertiefungen in dem zumindest einen Längsrand dem Schichtmaß der übereinander anzuordnenden Normziegeln entspricht.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Darstellung einer Wasserwaage,
- Fig. 2: einen Ausschnitt der Wasserwaage gemäß Fig. 1 in vergrößerter Darstel- lung,
- Fig. 3: eine Seitenansicht der Wasserwaage gemäß Fig. 1,
- Fig. 4: eine Draufsicht der Wasserwaage gemäß Fig. 1,
- Fig. 5: einen Ausschnitt der Seitendarstellung der Wasserwaage gemäß Fig. 3,
- Fig. 6: eine Draufsicht auf die Wasserwaage gemäß Fig. 5,
- Fig. 7: eine Unteransicht der Wasserwaage gemäß Fig. 5 und
- Fig. 8: eine weitere Ausführungsform einer Wasserwaage in Draufsicht.

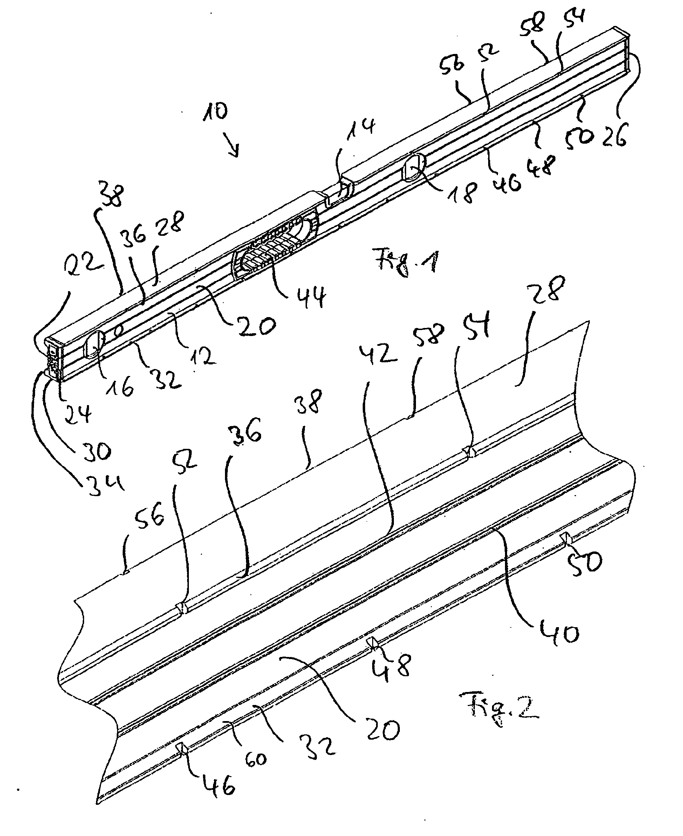

In Fig. 1 ist rein prinzipiell eine Wasserwaage 10 dargestellt, die in gewohnter Weise einen Wasserwaagenkörper 12 mit Lagesensoren in Form von eingelassenen Libellen 14, 16, 18 aufweist, um die Horizontalität bzw. Vertikalität von Gegenständen wie Mauerwerken überprüfen zu können. Der Wasserwaagenkörper 12 weist die Geometrie eines I-Profils mit Seitenflächen 20, 22, vorzugsweise mit Schutzkappen 24, 26 abgedeckte Stirnseiten bzw. -flächen sowie Längsflächen 28, 30 auf, die als Messflächen bzw. -sohlen dienen. Dabei stehen die Messflächen 28, 30 mit ihren Längsrändern 32, 34, 36, 38 über den Seitenflächen 20, 22 vor, wodurch sich die I-Geometrie ergibt.

Da der Wasserwaagenkörper 12 als Hohlkörper ausgebildet ist, können zu Versteifungszwecken in dessen Längsrichtung, und zwar in den Seitenflächen 20, 22 Längsrippen 40, 42 verlaufen. Ferner erstreckt sich zwischen den Seitenflächen 20, 22 ein mit Kunststoff ausgekleideter Griff 44, ohne dass es sich hierbei um ein zwingendes Merkmal handelt. Gleiches gilt in Bezug auf die Gestaltung der Rippen 40, 42, der Anordnung der Libellen 16, 18 und/oder der Endkappen 24, 26.

Losgelöst hiervon zeichnet sich die erfindungsgemäße Wasserwaage dadurch aus, dass in den Längsrändern 32, 34, 36, 38 Vertiefungen wie Einkerbungen ausgebildet sind, die in der Fig. 2 mit den Bezugszeichen 46, 48, 50, 52, 54, 56, 58 gekennzeichnet sind. Dabei sind die Vertiefungen 46, 48, 50, 52, 54, 56, 58 derart in den Längsrändern 32, 34, 36, 38 angeordnet, dass sich in jedem Längsrand 32, 34, 36, 38 eine gleichmäßige Folge von Vertiefungen ergibt, dass also die Abstände der Vertiefungen 46, 48 und 48, 50 des Längsrandes 32 zueinander gleich sind, wohingegen die Vertiefungen -in einem anderen Längsrand- im Ausführungsbeispiel in den Längsrändern 36, 38 hiervon abweichen können, d.h. dass sich der Abstand zwischen den Vertiefungen 52, 54 bzw. 56, 58 von denen der Vertiefungen 46, 48 bzw. 48, 50 unterscheidet.

Mit anderen Worten weisen zumindest zwei Längsränder jeweils eine gleichmäßige Folge von Vertiefungen auf, wobei die Vertiefungen der einen Folge zu denen der anderen Folge einen abweichenden Abstand besitzen. Dies wird auch anhand der perspektivischen Darstellung gemäß Fig. 2 deutlich.

Die Erfindung wird selbstverständlich nicht verlassen, wenn in einem Längsrand oder in mehreren Längsrändern die gleichen Folgen von Vertiefungen ausgebildet sind.

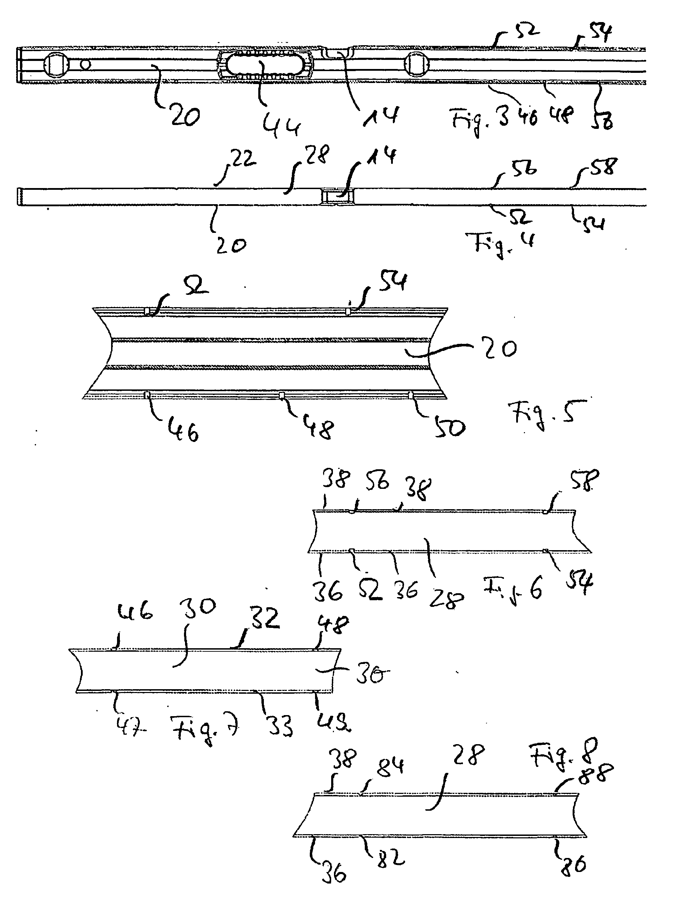

Aus der zeichnerischen Darstellung ergibt sich des Weiteren, dass die eine Messfläche begrenzenden Längsränder gleiche Folgen aufweisen, d. h., dass die in den die Messfläche 28 begrenzenden Längsrändern 36, 38 vorhandenen Vertiefungen 52, 54 gleich beabstandet sind. Des Weiteren verlaufen die Vertiefungen in Längsrichtung des Wasserwaagenkörpers 12 derart, dass die paarweise angeordneten Vertiefungen 52, 56 bzw. 54, 58 einen gleichen Abstand zur Stirnfläche bzw. den Endkappen 24, 26 aufweisen. Die entsprechenden Verhältnisse ergeben sich auch aus den Fig. 3 und 4, ohne dass es weitergehender Erläuterungen bedarf.

Die Vertiefungen 46, 48, 50, 52, 54, 56, 58 verlaufen bevorzugterweise in sich zur freien Außenlängsseite verjüngenden Bereichen der Längsränder 32, 34, 36, 38, wie sich aus der perspektivischen Darstellung gemäß Fig. 2 ergibt. So ist der sich verjüngende Längsrandbereich 32 mit den Bezugszeichen 60 gekennzeichnet, der im Schnitt eine Trapez- oder Dreieckgeometrie aufweist.

Aus der Fig. 2 ergibt sich auch, dass die Vertiefungen 46, 48 im Schnitt eine Rechteckgeometrie aufweisen, wobei die Erstreckung in Längsrichtung des Profilkörpers in etwa 1 mm und quer zur Längsrichtung entlang der Seitenflächen in etwa 3 mm beträgt.

Den Fig. 6 und 7 sind Drauf- bzw. Unteransichten der Wasserwaage 10 zu entnehmen. Man erkennt die Rechteckgeometrie der Vertiefungen 52, 54, 56, 58 im Bereich der Oberseite und die Vertiefungen 46, 47, 48, 49 im Bereich der Unterseite. Dabei gehen die Vertiefungen von der jeweiligen Außenkante der Längsränder 32, 33, 36, 38 aus.

Aus dem Vergleich der Darstellungen der Vertiefungen ergibt sich des Weiteren, dass die Vertiefungen 52, 56 in der Oberseite 28 fluchtend zu den Vertiefungen 46, 47 in der Unterseite 30 angeordnet sind. Demgegenüber verlaufen die Vertiefungen 54, 58 der Oberseite 28 zu den Vertiefungen 48, 49 der Unterseite 30 versetzt.

Unabhängig hiervon ist darauf hinzuweisen, dass sich die Vertiefungen nicht zwingend z. B. durch Fräsen bis in den Wasserwaagenkörper 12 hinein erstrecken müssen. Vielmehr reicht es aus, wenn allein die Lackierung bzw. die Beschichtung des Wasserwaagenkörpers 12 durchstoßen wird, so dass der Wasserwaagenkörper 12, der z. B. aus Aluminium besteht, sichtbar wird. Durch den Kontrast zwischen dem Wasserwaagenkörper und der Beschichtung bzw. Lackierung werden die Vertiefungen optisch klar sichtbar und können somit die ihnen zugedachte Aufgabe lösen.

Die Gestaltung von Vertiefungen 80, 84, 86, 88 gemäß Fig. 8 unterscheiden sich von den zuvor beispielhaft beschriebenen dahingehend, dass im Schnitt keine Rechteckgeometrie, sondern eine Dreieckform vorliegt. Ansonsten entspricht der Verlauf der Vertiefungen 82, 84, 86, 88 denen der Fig. 6 und 7.

## Patentansprüche

1. Wasserwaage (10) umfassend einen Profilkörper (12) mit Seitenflächen (20, 22), Stirnflächen oder -bereichen (24, 26) und zwischen den Seitenflächen verlaufenden Messflächen bildenden Längsflächen (28, 30), die mit ihren Längsrändern (32, 34, 36, 38) seitlich über die Seitenflächen vorstehen, sowie zumindest einen Lagesensor wie Libelle (14, 16, 18), wobei
in zumindest einem Längsrand (32, 34, 36, 38) eine gleichmäßige Folge von Vertiefungen (46, 48, 50, 52, 54, 56, 58) vorgesehen ist,
**dadurch gekennzeichnet,**
**dass** der Abstand zwischen den Vertiefungen (46, 48, 50, 52, 54, 56, 58) der Folge gleich Schichtmaß eines Nonnziegels ist.

2. Wasserwaage nach Anspruch 1,
**dadurch gekennzeichnet,**
**dass** der zumindest eine Längsrand (32) die gleichmäßige Folge erster Vertiefungen (46, 48, 50) und ein zweiter Längsrand (36) eine gleichmäßige Folge zweiter Vertiefungen (52, 54) aufweist, deren Abstände von denen der ersten Vertiefungen abweichen.

3. Wasserwaage nach Anspruch 1 oder 2,
**dadurch gekennzeichnet,**
**dass** Folgen mit den unterschiedlichen Abständen der Vertiefungen (46, 48, 50, 52, 54, 56, 58) von den entlang einer Seitenfläche (20, 22) verlaufenden Längsrändern (32, 34, 36, 38) ausgehen.

4. Wasserwaage nach zumindest einem der vorhergehenden Ansprüche,
**dadurch gekennzeichnet,**
**dass** die Längsränder (32, 34, 36, 38) einer Messfläche gleiche Folgen aufweisen.

5. Wasserwaage nach zumindest einem der vorhergehenden Ansprüche,
**dadurch gekennzeichnet,**
**dass** die Vertiefungen (46, 48, 50. 52, 54, 56, 58) Einkerbungen sind.

6. Wasserwaage nach zumindest einem der vorhergehenden Ansprüche,
**dadurch gekennzeichnet,**
**dass** die Vertiefungen (46, 48, 50, 52, 54, 56, 58) eine Rechteckgenometrie aufweisende Aussparungen wie Nuten in dem Längsrand sind oder dass die Vertiefungen (82, 84, 86, 88) im Schnitt entlang den Längsrichtung der Wasserwaage (10) eine dreieckförmige Geometrie aufweisen.

7. Wasserwaage nach zumindest einem der vorhergehenden Anspruche,
**dadurch gekennzeichnet,**
**dass** die Vertiefungen (46, 48, 50, 52, 54, 56, 58) beabstandet zur von der Seitenfläche aufgespannten Ebene enden.

8. Wasserwaage nach zumindest einem der vorhergehenden Ansprüche,
**dadurch gekennzeichnet,**
**dass** der Längsrand (32, 34, 36, 38) endseitig einen sich querschnittsmäßig verjüngenden Randbereich (60) aufweist, innerhalb dessen die Vertiefungen (46, 48, 50, 52, 54, 56, 58) verlaufen.

9. Wasserwaage nach zumindest einem der vorhergehenden Ansprüche,
**dadurch gekennzeichnet,**
**dass** die Vertiefungen (46, 48, 50, 52, 54, 56, 58) ausschließlich Beschichtung oder Lackierung der Längsränder (32, 34, 36, 38) durchsetzen.

10. Wasserwaage nach zumindest einem der vorhergehenden Ansprüche,
**dadurch gekennzeichnet,**
**dass** die Vertiefungen (46, 48, 50, 52, 54, 56, 58) an ihren außenlängsseitig verlaufenden Kanten verrundet sind.

11. Wasserwaage nach zumindest einem der vorhergehenden Ansprüche,
**dadurch gekennzeichnet,**
**dass** die Vertiefungen (46, 48, 50, 52, 54, 56, 58) in Längsrichtung des Profilkörpers eine Erstreckung L mit 1 mm ≤L ≤10 mm, vorzugsweise L ≤2 mm aufweisen und/oder dass die Vertiefungen (46, 48, 50, 52, 54, 56, 58) senkrecht zur Längsrichtung des Profilkörpers entlang der Seitenfläche (20, 22) eine Erstreckung T mit 0, 1 mm ≤T ≤5 mm, vorzugsweise 2 mm ≤T ≤4 mm aufweisen.

12. Wasserwaage nach zumindest einem der vorhergehenden Ansprüche,
**dadurch gekennzeichnet,**
**dass** die Vertiefungen (46, 48, 50, 52, 54, 56, 58) in den Längsränder (32, 34, 36, 38) außerhalb der von diesen begrenzten Messfläche (28, 30) verlaufen.

13. Verwendung einer Wasserwaage (10) umfassend einen Profilkörper (12) mit Seitenflächen (20,22). Stirnflächen (24,26) und zwischen den Seitenflächen verlaufenden Messflächen bildenden Längsflächen, die mit ihren Längsränderm (32,34 36,38) seitlich über die Seitenflächen vorstehen, sowie zumindest einen Lagesensor (14,16,18) wobei in zumindest einem Längsrand eine gleichmäßige Folge von Vertiefungen (46,48,50,52,54,56,58) vorgesehen ist, zum Errichten eines Mauerwerks von im Schichtmaß übereinander anordbaren Normziegeln, wobei der Abstand zwischen zwei aufeinander folgenden Vertiefungen in dem zumindest einen Längsrand dem Schichtmaß der übereinander anzuordnenden Normziegeln entspricht.

## Claims

1. Spirit level (10) comprising a profiled body (12) having lateral surfaces (20, 22), end faces or regions (24, 26), and longitudinal surfaces (28, 30) that form measuring surfaces running between the lateral surfaces, said longitudinal surfaces project laterally over the lateral surfaces with their longitudinal edges (32, 34, 36, 38), as well as at least one position sensor, such as a vial (14, 16, 18), whereby
a uniform series of indentations (46, 48, 50 52, 54, 56, 58) is provided in at least one longitudinal edge (32, 34, 36, 38)
**characterized in**
**that** the distance between the indentations of the series is equal to the stacked volume of a standard brick.

2. Spirit level according to claim 1,
**characterized in**
**that** at least one longitudinal edge (32) comprises the uniform series of first indentations (46, 48, 50) and a second longitudinal edge (36) comprises a uniform series of second indentations (52, 54), the distances of which differs from the ones of the first indentations.

3. Spirit level according to claim 1 or 2,
**characterized in**
**that** series with the different distances of the indentations (46, 48, 50, 52, 54, 56, 58) extend from the longitudinal edges (32, 34, 36, 38) running along a lateral surface (20, 22).

4. Spirit level according to at least one of the preceding claims,
**characterized in**
**that** the longitudinal edges (32, 34, 36, 38) of a measuring surface have identical series.

5. Spirit level according to at least one of the preceding claims,
**characterized in**
**that** the indentations (46, 48, 50, 52, 54, 56, 58) are notches.

6. Spirit level according to at least one of the preceding claims,
**characterized in**
**that** the indentations (46, 48, 50, 52, 54, 56, 58) are recesses, such as grooves, featuring a rectangular geometry in the longitudinal edge, or that the indentations (82, 84, 86, 88) feature a triangular geometry in cross section along the longitudinal direction of the spirit level (10).

7. Spirit level according to at least one of the preceding claims,
**characterized in**
**that** the indentations (46, 48, 50, 52, 54, 56, 58) end at a distance to the plane defined by the lateral surface.

8. Spirit level according to at least one of the preceding claims,
**characterized in**
**that** the longitudinal edge (32, 34, 36, 38) at its end side has an edge area (60) that tapers in cross section, within which the indentations (46, 48, 50, 52, 54, 56, 58) run.

9. Spirit level according to at least one of the preceding claims,
**characterized in**
**that** the indentations (46, 48, 50, 52, 54, 56, 58) penetrate exclusively coating or paintwork of the longitudinal edges (32, 34, 36, 38).

10. Spirit level according to at least one of the preceding claims,
**characterized in**
**that** the indentations (46, 48, 50, 52, 54, 56, 58) are rounded at their outer longitudinal edges.

11. Spirit level according to at least one of the preceding claims,
**characterized in**
**that** in longitudinal direction of the profiled body the indentations (46, 48, 50, 52, 54, 56, 58) have an extension L of 1 mm ≤ L ≤ 10 mm, preferably L ≤ 2 mm, and/or that vertically to the longitudinal direction of the profiled body along the lateral surface (20, 22) the indentations (46, 48, 50, 52, 54, 56, 58) have an extension T of 0.1 mm ≤ T ≤ 5 mm, preferably 2 mm ≤ T ≤ 4 mm.

12. Spirit level according to at least one of the preceding claims,
**characterized in**
**that** the indentations (46, 48, 50, 52, 54, 56, 58) run within the longitudinal edges (32, 34, 36, 38) outside of the measuring surface (28, 30) delimited by them.

13. Use of a spirit level (10) comprising a profiled body (12) with lateral surfaces (20 22), end faces (24, 26), and longitudinal surfaces that form measuring surfaces running between the lateral surfaces, said longitudinal surfaces project laterally over the lateral surfaces (32, 34, 36, 38) with their longitudinal edges, as well as at least one position sensor (14, 16, 18), whereby in at least one longitudinal edge is provided a uniform series of indentations (46, 48, 50, 52, 54, 56, 58), for the purpose of building a brickwork of standard bricks that can be arranged one on top of the other in stacked volume, whereby the distance between two successive indentations in the at least one longitudinal edge corresponds to the stacked volume of the standard bricks to be arranged one on top of the other.

## Revendications

1. Niveau à bulle (10) comprenant un corps profilé (12) avec des surfaces latérales (20, 22), des surfaces ou sections frontales (24, 26) et des surfaces longitudinales (28, 30) formant des surfaces de mesure s'étendant entre les surfaces latérales, lesquelles surfaces longitudinales dépassent latéralement avec leurs bords longitudinaux (32, 34, 36, 38) des surfaces latérales, ainsi qu'au moins un capteur de position, tel qu'un niveau (14, 16, 18), sachant
qu'une suite uniforme de renfoncements (46, 48, 50, 52, 54, 56, 58) est prévue sur au moins un bord longitudinal (32, 34, 36, 38),
**caractérisé en ce**
**que** la distance entre les renfoncements (46, 48, 50, 52, 54, 56, 58) de la suite est égale à la hauteur en dimensions de coordination modulaire d'une brique normée.

2. Niveau à bulle selon la revendication 1,
**caractérisé en ce**
**que** l'au moins un bord longitudinal (32) présente la suite uniforme de premiers renfoncements (46, 48, 50) et un second bord longitudinal (36) une suite uniforme de deuxièmes renfoncements (52, 54) dont les distances divergent de celles des premiers renfoncements.

3. Niveau à bulle selon la revendication 1 ou 2,
**caractérisé en ce**
**que** les suites avec les différentes distances entre les renfoncements (46, 48, 50, 52, 54, 56, 58) partent des bords longitudinaux (32, 34, 36, 38) s'étendant le long d'une surface latérale (20, 22).

4. Niveau à bulle selon au moins l'une des revendications précédentes,
**caractérisé en ce**
**que** les bords longitudinaux (32, 34, 36, 38) d'une surface de mesure présentent des suites identiques.

5. Niveau à bulle selon au moins l'une des revendications précédentes,
**caractérisé en ce**
**que** les renfoncements (46, 48, 50, 52, 54, 56, 58) sont des entailles.

6. Niveau à bulle selon au moins l'une des revendications précédentes,
**caractérisé en ce**
**que** les renfoncements (46, 48, 50, 52, 54, 56, 58) sont des évidements présentant une géométrie rectangulaire, tels que des rainures dans le bord longitudinal, ou que les renfoncements (82, 84, 86, 88) présentent une géométrie triangulaire en coupe le long du sens longitudinal du niveau à bulle (10).

7. Niveau à bulle selon au moins l'une des revendications précédentes,
**caractérisé en ce**
**que** les renfoncements (46, 48, 50, 52, 54, 56, 58) se terminent à distance du plan tendu par la surface latérale.

8. Niveau à bulle selon au moins l'une des revendications précédentes,
**caractérisé en ce**
**que** le bord longitudinal (32, 34, 36, 38) présente à une extrémité une bordure (60) se rétrécissant en coupe transversale, à l'intérieur de laquelle les renfoncements (46, 48, 50, 52, 54, 56, 58) s'étendent.

9. Niveau à bulle selon au moins l'une des revendications précédentes,
**caractérisé en ce**
**que** les renfoncements (46, 48, 50, 52, 54, 56, 58) traversent exclusivement le revêtement ou la peinture des bords longitudinaux (32, 34, 36, 38).

10. Niveau à bulle selon au moins l'une des revendications précédentes,
**caractérisé en ce**
**que** les renfoncements (46, 48, 50, 52, 54, 56, 58) sont arrondis sur leurs bords longitudinaux extérieurs.

11. Niveau à bulle selon au moins l'une des revendications précédentes,
**caractérisé en ce**
**que** les renfoncements (46, 48, 50, 52, 54, 56, 58) présentent dans le sens longitudinal du corps profilé une étendue L de 1 mm ≤ L ≤ 10 mm, de préférence de L ≤ 2 mm et/ou que les renfoncements (46, 48, 50, 52, 54, 56, 58) présentent perpendiculairement au sens longitudinal du corps profilé, le long de la surface latérale (20, 22), une étendue T de 0, 1 mm ≤ T ≤ 5 mm, de préférence de 2 mm ≤ T ≤ 4 mm.

12. Niveau à bulle selon au moins l'une des revendications précédentes,
**caractérisé en ce**
**que** les renfoncements (46, 48, 50, 52, 54, 56, 58) s'étendent dans les bords longitudinaux (32, 34, 36, 38) en dehors de la surface de mesure (28, 30) délimitée par ceux-ci.

13. Utilisation d'un niveau à bulle (10) comprenant un corps profilé (12) avec des surfaces latérales (20, 22), des surfaces frontales (24, 26) et des surfaces longitudinales formant des surfaces de mesure s'étendant entre les surfaces latérales, lesquelles surfaces longitudinales dépassent latéralement avec leurs bords longitudinaux (32, 34, 36, 38) des surfaces latérales, ainsi qu'au moins un capteur de position (14, 16, 18), sachant que dans au moins un bord longitudinal est prévue une suite uniforme de renfoncements (46, 48, 50, 52, 54, 56, 58), pour la construction d'un mur de briques normées pouvant être empilées les unes au-dessus des autres en hauteur en dimensions de coordination modulaire, sachant que la distance entre deux renfoncements successifs dans l'au moins un bord longitudinal correspond à la hauteur en dimensions de coordination modulaire des briques normées à disposer les unes au-dessus des autres.
